# FASCICULE DE BREVET EUROPEEN

(11) **EP 1 606 796 B1**
(45) Date de publication et mention de la délivrance du brevet: **03.06.2009**
(21) Numéro de dépôt: 04718327.2
(22) Date de dépôt: 08.03.2004
(51) Int. Cl.: G10L 15/28

(54) **PROCEDE DE RECONNAISSANCE DE PAROLE DISTRIBUEE**
VERTEILTES SPRACHERKENNUNGSVERFAHREN
DISTRIBUTED SPEECH RECOGNITION METHOD

(30) Priorité: 25.03.2003 FR 0303614
(43) Date de publication de la demande: 21.12.2005
(73) Titulaire: FRANCE TELECOM, 75015 Paris (FR)
(72) Inventeur: MONNE, Jean, F-22700 Perros Guirec (FR); PETIT, Jean-Pierre, F-22220 Minihy Tréguier (FR); BRISARD, Patrick, F-92320 Châtillon (FR)
(74) Mandataire: Loisel, Bertrand
(86) Numéro de dépôt international: PCT/FR2004/000547
(87) Numéro de publication internationale: WO 2004/088637

(56) Documents cités:
- US-A- 6 122 613
- US-A1- 2003 004 720
- US-B1- 6 487 534

## Description

La présente invention est relative au domaine de la commande vocale d'applications, exercée sur des terminaux utilisateurs, grâce à la mise en oeuvre de moyens de reconnaissance de la parole. Les terminaux utilisateurs considérés sont tous les dispositifs dotés d'un moyen de capture de la parole, communément un microphone, possédant des capacités de traitement de ce son et reliés à un ou des serveurs par un canal de transmission. Il s'agit par exemple d'appareils de commande, de télécommande utilisés dans des applications domotiques, dans des automobiles (commande d'auto-radio ou d'autres fonctions du véhicule), dans des PC ou des postes téléphoniques. Le champ des applications concernées est essentiellement celui où l'utilisateur commande une action, demande une information ou veut interagir à distance en utilisant une commande vocale. L'utilisation de commandes vocales n'exclut pas l'existence dans le terminal utilisateur d'autres moyens d'action (système multi-modal), et le retour d'informations, d'états ou de réponses peut également se faire sous forme combinée visuelle, sonore, olfactive et tout autre moyen humainement perceptif.

De manière générale, les moyens pour la réalisation de la reconnaissance de parole comprennent des moyens d'obtention d'un signal audio, des moyens d'analyse acoustique qui extraient des paramètres de modélisation et enfin des moyens de reconnaissance qui comparent ces paramètres de modélisation extraits à des modèles, et proposent la forme mémorisée dans les modèles qui peut être associée au signal de la façon la plus probable. Optionnellement des moyens de détection d'activité vocale VAD (" Voice Activation Detection ") peuvent être utilisés. Ils assurent la détection des séquences correspondant à de la parole et devant être reconnues. Ils extraient du signal audio en entrée, en-dehors des périodes d'inactivité vocale, des segments de parole, qui seront ensuite traités par les moyens d'extraction de paramètres de modélisation.

Plus particulièrement, l'invention porte sur les interactions entre les trois modes de reconnaissance de la parole dits embarqué, centralisé et distribué.

Dans un mode de reconnaissance de parole embarquée, l'ensemble des moyens pour effectuer la reconnaissance de parole se trouvent au niveau du terminal utilisateur. Les limitations de ce mode de reconnaissance sont donc liées notamment à la puissance des processeurs embarqués, et à la mémoire disponible pour stocker les modèles de reconnaissance de parole. En contrepartie, ce mode autorise un fonctionnement autonome, sans connexion à un serveur, et à ce titre est voué à un fort développement lié à la réduction du coût de la capacité de traitement.

Dans un mode de reconnaissance de la parole centralisée, toute la procédure de reconnaissance de parole et les modèles de reconnaissance se trouvent et s'exécutent sur une machine, appelée généralement serveur vocal, accessible par le terminal utilisateur. Le terminal transmet simplement au serveur un signal de parole. Cette méthode est utilisée notamment dans les applications offertes par les opérateurs de télécommunication. Un terminal basique peut ainsi accéder à des services évolués, activés à la voix. De nombreux types de reconnaissance de parole (robuste, flexible, très grand vocabulaire, vocabulaire dynamique, parole continue, mono ou multi locuteurs, plusieurs langues, etc ) peuvent être implémentés dans un serveur de reconnaissance de parole. En effet, les machines centralisées ont des capacités de stockage de modèles, des tailles de mémoire de travail et des puissances de calcul importantes et croissantes.

Dans un mode de reconnaissance de parole distribuée, les moyens d'analyse acoustique sont embarqués dans le terminal utilisateur, les moyens de reconnaissance étant au niveau du serveur. Dans ce mode distribué, une fonction de débruitage associée aux moyens d'extraction des paramètres de modélisation peut être avantageusement réalisée à la source. Seuls les paramètres de modélisation sont transmis, ce qui permet un gain substantiel en débit de transmission, particulièrement intéressant pour les applications multimodales. De plus, le signal à reconnaître peut être mieux protégé contre les erreurs de transmission. Optionnellement on peut aussi embarquer la détection d'activité vocale (VAD) pour ne transmettre les paramètres de modélisation que durant les séquences de parole, ce qui a pour avantage de réduire de manière importante la durées de transmission active. La reconnaissance de parole distribuée permet en outre de véhiculer sur le même canal de transmission des signaux de parole et de données, notamment texte, images ou vidéos. Le réseau de transmission peut être par exemple de type IP, GPRS, WLAN ou Ethemet. Ce mode permet également de bénéficier de procédures de protection et de correction contre les pertes de paquets constituant le signal transmis à destination du serveur. Cependant il nécessite la disponibilité de canaux de transmission de données, avec un protocole strict de transmission.

L'invention propose un système de reconnaissance de parole comportant des terminaux utilisateurs et des serveurs combinant les différentes fonctions offertes par les modes de reconnaissance de parole embarquée, centralisée et distribuée, pour offrir le maximum d'efficacité, de confort et d'ergonomie aux utilisateurs de services multi modaux où la commande vocale est utilisée.

Le brevet US 6 487 534-B1 décrit un système de reconnaissance de parole distribuée comportant un terminal utilisateur disposant des moyens de détection d'activité vocale, de moyens d'extraction des paramètres de modélisation et de moyens de reconnaissance. Ce système comprend en outre un serveur disposant également de moyens de reconnaissance. Le procédé décrit est consiste à effecteur une première phase de reconnaissance au niveau du terminal utilisateur. Puis en fonction des résultats de cette première phase, les paramètres de modélisation calculés au niveau du terminal peuvent être alors envoyés à destination du serveur, afin notamment de déterminer cette fois grâce aux moyens de reconnaissance du serveur, une forme mémorisée dans les modèles de celui-ci et associée au signal envoyé.

Le but visé par le système décrit dans le document cité est de diminuer la charge au niveau du serveur Cependant il s'ensuit que la reconnaissance s'effectue au mieux après le temps nécessaire à la première phase dans le terminal. Lorsqu'une deuxième phase doit avoir lieu, le temps de reconnaissance total est égal au temps de reconnaissance de la première phase ajouté à celui de la seconde phase.

Le document US 6 122 613 décrit également un système de reconnaissance de parole dans lequel une reconnaissance, de parole à partir d'un signal audio est faite en série ou en parallèle au niveau d'un serveur et d'un terminal.

Le document US2003/00 4720 est aussi relatif à un système de reconnaissance de parole au sein duquel on cherche à augmenter la tolérance aux fautes dues à la transmission de données.

Un but de la présente invention est de proposer un procédé qui vise à optimiser le temps nécessaire à la reconnaissance de parole, et donc à la réalisation de l'action demandée par l'utilisateur.

Suivant un premier aspect, l'invention propose un procédé de reconnaissances de parole distribuée, comportant au moins un terminal utilisateur et au moins un serveur, aptes à communiquer entre eux par l'intermédiaire d'un réseau de télécommunications, selon lequel au niveau du terminal utilisateur, on réalise au moins les étapes suivantes :
- obtenir un signal audio à reconnaître : et,
- calculer des paramètres de modélisation du signal audio à reconnaître; et,
- tenter d'associer une forme mémorisée aux paramètres de modélisation; et,
- Indépendamment de l'étape de tentative d'association d'une forme mémorisée :
   - sélectionner un signal parmi au moins le signal audio à reconnaître et un signal indiquant les paramètres de modélisation, en fonction de critères relatifs à la charge des différents moyens de traitement au niveau du terminal et du serveur, et/ou en fonction de critères relatifs à la disponibilité de canaux de transmission voix ou données ; et
   - émettre à destination du serveur le signal sélectionné ;
et selon lequel au niveau du serveur, on réalise au moins les étapes suivantes :
- recevoir le signal émis par le terminal utilisateur ;
- tenter d'associer une forme mémorisée au signal reçu.

Un procédé selon l'invention permet d'éviter de cumuler un temps de traitement au niveau du terminal et un temps de traitement au niveau du serveur, et ainsi de diminuer le temps pour donner suite à la demande de l'utilisateur.

Il permet aussi de tirer avantage des avantages des caractéristiques des moyens de reconnaissance dont disposent respectivement le terminal et le serveur, notamment lorsque le signal à reconnaître est de nature indéfinie pour déterminer au plus vite la réponse à effectuer.

Dans des modes de mise en oeuvre préférés, le signal émis par le terminal utilisateur à destination du serveur est sélectionné parmi au moins le signal audio à reconnaître et un signal indiquant les paramètres de modélisation. Alors, si le signal reçu est de type audio, le serveur calcule des paramètres de modélisation du signal audio reçu; et tente d'associer une forme mémorisée aux paramètres de modélisation du signal audio reçu. Si le signal reçu indique des paramètres de modélisation, le serveur tente d'associer une forme mémorisée auxdits paramètres de modélisation.

Le choix du signal transmis - soit le signal audio (compressé ou non), soit le signal délivré par les moyens de calcul des paramètres de modélisation du terminal - peut être défini soit par le type d'applications en cours, soit par l'état du réseau, soit suite à une coordination entre des moyens de contrôle respectifs du terminal et du serveur.

Avantageusement, l'obtention au terminal du signal à reconnaître comporte une détection d'activité vocale appliquée à un signal audio d'origine pour produire le signal audio à reconnaître en débarrassant le signal d'origine de périodes d'inactivité vocale. Le signal à émettre sera donc sélectionné parmi ce signal audio débarrassé de périodes d'inactivité vocale et le signal indiquant des paramètres de modélisation.

Dans un mode de mise en oeuvre du procédé selon l'invention, le signal émis est sélectionné un signal parmi au moins le signal audio d'origine, le signal audio représentatif du signal d'origine débarrassé de périodes d'inactivité vocale après détection vocale et le signal indiquant les paramètres de modélisation.

Avantageusement, si le signal reçu est un signal audio débarrassé de périodes d'inactivité vocale, le serveur calcule des paramètres de modélisation du signal reçu et tente d'associer une forme mémorisée aux paramètres de modélisation du signal audio reçu. Lorsque le signal reçu est un signal de type audio, mais sur lequel il n'a pas été réalisée de détection d'activité vocale, le serveur réalise une détection d'activité vocale appliquée au signal audio reçu pour produire un signal audio à reconnaître en débarrassant le signal d'origine de périodes d'inactivité vocale. Puis il calcule des paramètres de modélisation du signal audio à reconnaître. Enfin, il tente d'associer une forme mémorisée aux paramètres de modélisation.

Avantageusement, on choisit la forme mémorisée associée déterminée au niveau du terminal quand elle existe. On choisit la forme mémorisée associée déterminée la première. Ou encore on choisit la forme mémorisée associée la meilleure selon un critère défini (par exemple, probabilité de vraisemblance).

Suivant un deuxième aspect, l'invention propose un terminal utilisateur pour mettre en oeuvre le procédé de reconnaissance de parole distribuée décrit ci-dessus.

Suivant un troisième aspect, l'invention propose un serveur pour mettre en oeuvre le procédé de reconnaissance de parole distribuée décrit ci-dessus.

Dans un mode de réalisation préféré, certains au moins des moyens pour réaliser le traitement de la reconnaissance au niveau du terminal (moyens d'extraction de paramètres ou des moyens de reconnaissance) ont été téléchargés par l'intermédiaire du réseau de télécommunications. Ils peuvent par exemple être téléchargés par le serveur.

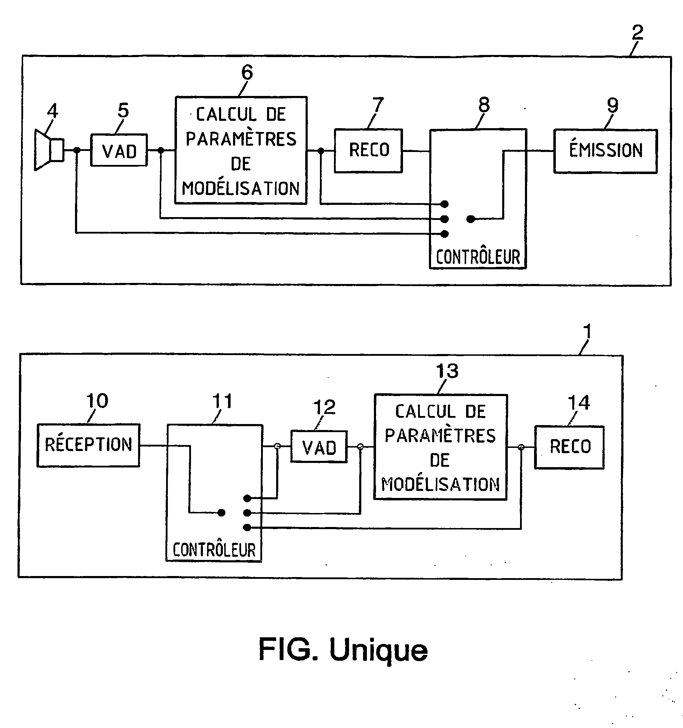

D'autres caractéristiques et avantages de l'invention apparaîtront encore à la lecture de la description qui va suivre. Celle-ci est purement illustrative et doit être lue en regard des dessins annexés sur lesquels la figure unique est un schéma représentant un exemple de terminal utilisateur et un exemple de serveur selon l'invention.

Le système représenté sur la figure unique comporte un serveur 1 et un terminal utilisateur 2, qui communiquent entre eux par l'intermédiaire d'un réseau (non représenté) disposant de canaux pour la transmission de signaux de voix et de canaux pour la transmission de signaux de données.

Le terminal 2 comporte un microphone 4, qui recueille la parole à reconnaître d'un utilisateur sous forme d'un signal audio. Le terminal 2 comporte également des modules 5, 6, 7. Le module de détection d'activité vocale VAD 5 assure la détection des séquences correspondant à de la parole et devant être reconnues. Ce module 5 est par exemple conçu pour détecter rapidement des mots de commandes. Le module 6 effectue une analyse acoustique de façon connue en soi : il calcule des paramètres de modélisation, tout en réalisant une fonction de débruitage.

Le module 7 exécute un algorithme de reconnaissance de type connu, par exemple à base de modèles de Markov cachés avec un vocabulaire de taille réduite. Ce moteur de reconnaissance 7 peut fonctionner en mode monolocuteur, et nécessite une phase d'apprentissage préalable à partir de la voix de l'utilisateur.

Le terminal comprend un contrôleur 8 adapté pour sélectionner, un signal audio parmi le signal audio en sortie du microphone 4, un signal représentatif des segments de parole extraits par les moyens de détection d'activité vocale 5 et un signal indicatif des paramètres de modélisation 6.

Le terminal comprend en outre une interface 9 pour l'émission sur le réseau, à destination du serveur, du signal sélectionné par le contrôleur 8.

Le serveur 1 comporte une interface réseau 10 pour recevoir les signaux qui lui sont adressés et un contrôleur 11 qui analyse le signal reçu et le dirige ensuite sélectivement vers un module de traitement du serveur parmi plusieurs modules 12,13,14. Le module 12 est un détecteur d'activité vocale, qui assure la détection des segments correspondant à de la parole de façon similaire au module 5. Toutefois, il peut être différent du module 5, et par exemple conçu pour détecter rapidement des phrases entières. Son temps de réaction peut donc être différent de celui du module 5. Dans l'exemple présent, son temps de réaction sera plus lent. Le module 13 assure le calcul de paramètres de modélisation de façon semblable au module de calcul 6 du terminal. Toutefois, le modèle de calcul peut être différent. Le module 14 exécute un algorithme de reconnaissance de type connu, par exemple à base de modèles de Markov cachés avec un vocabulaire de taille quelconque, par exemple supérieur à 100 000 mots. Ce moteur de reconnaissance 14 compare les paramètres en entrée à des modèles de parole qui représentent des mots ou des phrases, et détermine la meilleure forme associée, compte tenu de modèles syntaxiques qui décrivent les enchaînements de mots attendus, de modèles lexicaux qui précisent les différentes prononciations des mots, et de modèles acoustiques représentatifs des sons prononcés. Ces modèles sont par exemple multilocuteurs, capables de reconnaître, avec une bonne fiabilité, de la parole, indépendamment du locuteur.

Le contrôleur 11 commande le module de VAD 12, le module de calcul de paramètres 13 et le moteur de reconnaissance 14 de façon à :
a/ lorsque le signal reçu par l'interface réseau 10 est de type audio et n'indique pas de segments de parole obtenus après détection d'activité vocale, activer le module de détection d'activité vocale 12 en leur adressant le signal reçu en tant que signal d'entrée, puis adresser les segments de parole extraits par le module 12 au module de calcul de paramètres de modélisation 13 en tant que paramètres d'entrée, puis adresser les paramètres extraits par ce module 13 au moteur de reconnaissance 14 en tant que paramètres d'entrée ;
b/ lorsque le signal reçu par l'interface de réception 10 indique des segments de parole après détection d'activité vocale, activer le module de calcul de paramètres de modélisation 13 en lui adressant le signal reçu en tant que signal d'entrée, puis adresser les paramètres extraits par ce module 13 au moteur de reconnaissance 14 en tant que paramètres d'entrée ;
c/ lorsque le signal reçu par l'interface de réception 10 indique des paramètres de modélisation, adresser lesdits paramètres indiqués au moteur de reconnaissance 14 en tant que paramètres d'entrée.

Considérons une application dans laquelle l'utilisateur énonce : « appelle Antoine », Antoine figurant dans le répertoire local. Le signal audio correspondant obtenu par le microphone 4 du terminal est traité par le module VAD 5, qui en extraits des segments de parole qui sont à leur tour adressés aux module 6, qui calcule des paramètres de modélisation. Ces paramètres sont ensuite adressés au moteur de reconnaissance 7 pour y associer une forme issue du dictionnaire local. En parallèle, le contrôleur 8 a sélectionné un signal à émettre parmi le signal audio d'origine, un signal audio indiquant les segments de parole extraits du signal audio d'origine après détection d'activité vocale et un signal indiquant les paramètres de modélisation. Le signal sélectionné est émis à l'aide de l'interface d'émission 9 à destination du serveur.

Dans le mode de réalisation considéré, le signal sélectionné par le contrôleur du terminal 8 est le signal audio d'origine, qui a été envoyé en direction du serveur dès qu'il a été acquis par le microphone 4.

Le serveur réceptionne le signal à reconnaître envoyé par le terminal, et le traite comme indiqué en a/ ci-dessus.

Le processus de reconnaissance s'effectue ainsi de part et d'autre. Le terminal détermine dans un temps T1 une forme associée F1; le serveur détermine une autre forme associée F2 dans un temps T2 différent de T1. Une des deux formes est retenue selon un critère de choix. Le critère de choix peut est par exemple le suivant : on choisit la forme la plus rapidement trouvée et ce dès qu'elle est trouvée, sans attendre la détermination de l'autre forme. L'applicatif local au terminal passe alors à la phase applicative suivante.

Puis l'utilisateur énonce « rechercher le message de Josiane ».

La réponse au niveau du terminal n'est pas consistante et se solde par un rejet après un temps T1'. La reconnaissance s'effectue en parallèle au niveau du serveur et aboutit en un temps T2' à la détermination d'une forme associée, qui va permettre de jouer le message demandé par l'utilisateur.

Un procédé de reconnaissance selon l'invention permet ainsi de combiner les avantages des systèmes de reconnaissance au niveau du terminal et du serveur. Les mots courts sont rapidement déterminés par le moteur de reconnaissance 7 du terminal et les phrases plus complexes sont reconnues rapidement par le moteur de reconnaissance 14 du serveur. Le temps de traitement est d'autant plus optimisé que les VAD respectives présentent des caractéristiques adaptées, la VAD 5 du terminal étant par exemple conçue pour détecter rapidement des mots de commande et la VAD 12 du serveur étant conçue pour détecter rapidement des phrases.

Le contrôleur du terminal 8 détermine le signal à transmettre à destination du serveur par exemple en fonction de critères de contrôle. Ces critères peuvent par exemple être liés à l'application concernée, ou à des problématiques de charges des différents moyens de traitement au niveau du terminal et du serveur (les moyens de contrôle respectifs peuvent coopérer), ou encore à des problématiques de disponibilité de canaux de transmission voix ou de canaux de transmission données.

Par exemple, pour certains terminaux, le signal envoyé sera systématiquement un signal indiquant des paramètres de modélisation. Pour d'autres terminaux, le signal envoyé dépendra de l'application en cours.

Dans un mode de réalisation de l'invention, en cas de problèmes de disponibilité de canaux de données ou du module de calcul 6 du terminal considéré, le contrôleur 8 est adapté pour transmettre le signal audio (d'origine ou après VAD). Ce signal audio pourra être transmis sur les canaux de transmission de signaux de voix disponibles.

Le façon de déterminer la forme finalement retenue et qui sera exploitée lors de la poursuite de l'application, entre une forme associée fournie par le module de reconnaissance du serveur et une forme associée fournie par celui du terminal peut s'effectuer sur la base de différents critères, qui peuvent varier d'un terminal à l'autre, mais aussi d'une application à l'autre ou d'un contexte donné à un autre.

Ces critères peuvent donner par exemple priorité à la reconnaissance effectuée au niveau du terminal, ou à la forme associée présentant le plus fort taux de probabilité, ou encore à la forme déterminée la plus rapidement. Ces critères de choix peuvent être intégrés par exemple dans les contrôleurs 8, 11 du terminal, ou du serveur.

Le serveur selon l'invention est également apte à effectuer de la reconnaissance de parole sur un signal transmis par un terminal ne disposant pas de moyens d'extraction de paramètres de modélisation, ni de moyens de reconnaissance (ou dont les moyens d'extraction ou de reconnaissance sont inactifs) et disposant éventuellement de VAD.

Dans un mode de réalisation, le moteur de reconnaissance 7 du terminal 2 est un programme exécutable téléchargé, par exemple depuis le serveur par des moyens classiques de transfert de données.

Avantageusement, pour une application donnée du terminal 2, des modèles de reconnaissance du terminal peuvent être téléchargés ou mis à jour au cours d'une session applicative connectée au réseau.

D'autres ressources logicielles utiles à la reconnaissance de parole peuvent aussi être téléchargés depuis le serveur 1, comme le module 6 de calcul de paramètres de modélisation ou le détecteur d'activité vocale 5.

D'autres exemples pourraient être décrits, mettant en oeuvre par exemple des applications liées aux voitures, à l'électroménager, multimédia.

Comme présenté dans les exemples de réalisation ci-dessus décrits, un système selon l'invention permet d'utiliser dans un délai de traitement optimisé pour un résultat optimisé les différentes ressources nécessaires au traitement de la reconnaissance de la parole et présentes au niveau du terminal (par exemple par téléchargement) et du serveur.

## Revendications

1. Procédé de reconnaissance de parole distribuée, comportant au moins un terminal utilisateur et au moins un serveur aptes à communiquer entre eux par l'intermédiaire d'un réseau de télécommunications, selon lequel au niveau du terminal utilisateur, on réalise au moins les étapes suivantes :
- obtenir un signal audio à reconnaître ;
- calculer des paramètres de modélisation du signal audio à reconnaître; et
- tenter d'associer une forme mémorisée aux paramètres de modélisation;
et selon lequel au niveau du serveur, on réalise au moins les étapes suivantes :
- recevoir un signal émis par le terminal utilisateur ;
- tenter d'associer une forme mémorisée au signal reçu ;
**caractérisé par** les étapes suivantes, réalisées au niveau du terminal utilisateur:
- Indépendamment de l'étape de tentative d'association d'une forme mémorisée :
- sélectionner un signai parmi au moins le signal audio à reconnaître et un signal indiquant les paramètres de modélisation, en fonction de critères relatifs à la, charge des différents moyens de traitement au niveau du terminal et du serveur, et/ou en fonction de critères relatifs à la disponibilité de canaux de transmission voix ou données ; et
- émettre à destination du serveur le signal sélectionné.

2. Procédé de reconnaissance de parole distribuée selon la revendication 1, selon lequel le signal émis par le terminal utilisateur à destination du serveur est sélectionné parmi au moins le signal audio à reconnaître et un signal indiquant les paramètres de modélisation ;
selon lequel si le signal reçu est de type audio, le serveur calcule des paramètres de modélisation du signal audio reçu, et tente d'associer une forme mémorisée aux paramètres de modélisation du signal audio reçu ;
et selon lequel si le signal reçu indique des paramètres de modélisation, le serveur tente d'associer une forme mémorisée auxdits paramètres de modélisation.

3. Procédé selon la revendication 1 ou la revendication 2, selon lequel l'obtention au terminal du signal à reconnaître comporte une détection d'activité vocale pour produire le signal audio à reconnaître sous forme de segments de parole extraits d'un signal audio d'origine en-dehors de périodes d'inactivité vocale.

4. Procédé selon la revendication 3, selon lequel le signai émis est un signal sélectionné parmi au moins le signal audio d'origine, le signal audio à reconnaître sous forme de segments extraits après détection vocale et le signal indiquant les paramètres de modélisation.

5. Procédé selon la revendication 2 à 4, selon lequel lorsque le signal reçu est de type audio :
- si le signal audio reçu est sous forme de segments de parole extraits après détection vocale, le serveur calcule des paramètres de modélisation du signal reçu et tente d'associer une forme mémorisée aux paramètres de modélisation du signal audio reçu ;
- sinon le serveur réalise une détection d'activité vocale appliquée au signal audio reçu pour produire un signal audio sous forme de segments de parole extraits du signal audio reçu en-dehors de périodes d'inactivité vocale, puis calcule des paramètres de modélisation du signal audio et tente d'associer une forme mémorisée aux paramètres de modélisation.

6. Procédé selon l'une quelconques des revendications précédentes, selon lequel on choisit la forme mémorisée associée déterminée au niveau du terminal quand elle existe.

7. Procédé selon les revendications 1 à 5 selon lequel on choisit la forme mémorisée associée déterminée le plus rapidement.

8. Procédé selon les revendications 1 à 6 selon lequel on choisit la forme mémorisée associée la meilleure selon un critère de choix défini.

9. Terminal utilisateur pour mettre en oeuvre un procédé de reconnaissance de parole distribuée selon l'une des revendications 1 à 8, comportant :
- des moyens d'obtention d'un signal audio à reconnaître ;
- des moyens de calcul de paramètres de modélisation du signal audio; et
- des moyens de reconnaissance pour associer au moins une forme mémorisée à des paramètres de modélisation calculés par les moyens de calcul;
**caractérisé en ce qu'**il comporte :
- des moyens de contrôle pour sélectionner un signal à émettre à destination du serveur parmi le signal audio à reconnaître et un signal indiquant les paramètres de modélisation calculés en fonction de critères relatifs à la charge des différents moyens de traitement au niveau du terminal et du serveur, et/ou en fonction de critères relatifs à la disponibilité de canaux de transmission voix ou données.

10. Terminal utilisateur selon la revendication 9 dans lequel les moyens d'obtention du signal audio à reconnaître comprennent des moyens de détection d'activité vocale pour produire le signal à reconnaître sous forme de segments de parole extraits d'un signal audio d'origine, en dehors de périodes d'inactivité vocale.

11. Terminal utilisateur selon la revendication 10 dans lequel les moyens de contrôle sont adaptés pour sélectionner au moins un signal à émettre à destination du serveur parmi le signal audlo d'origine, le signal audio à reconnaître sous forme des segments de parole extraits par les moyens de détection d'activité vocale et le signai indiquant les paramètres de modélisation calculés,

12. Terminal utilisateur selon les revendications 9 à 11, dans lequel au moins une partie des moyens de calcul de paramètres et des moyens de reconnaissance est téléchargée depuis le serveur.

13. Terminal utilisateur selon les revendications 9 à 12, comportant des moyens de détermination de la forme mémorisée à choisir entre les formes mémorisées déterminées respectivement au terminal et au serveur.

14. Serveur adapté pour mettre en oeuvre un procédé de reconnaissance de parole distribuée selon l'une des revendications 1 à 8 comprenant :
- des moyens de réception en provenance d'un terminal utilisateur d'un signal sélectionné audit terminal, et
- des moyens de reconnaissance pour associer au moins une forme mémorisée à des paramètres de modélisation en entrée ;
- des moyens de calcul de paramètres de modélisation d'un signal d'entrée ;
**caractérisé en ce qu'**il comporte:
- des moyens de contrôle pour commander les moyens de calcul et les moyens de reconnaissance de façon à :
• lorsque le signal reçu par les moyens de réception est de type audio, activer les moyens de calcul de paramètres en leur adressant le signal sélectionné en tant que signal d'entrée, et adresser les paramètres calculés par les moyens de calcul aux moyens de reconnaissance en tant que paramètres d'entrée, et,
• lorsque le signal sélectionné reçu par les moyens de réception indique des paramètres de modélisation, adresser lesdits paramètres indiqués aux moyens de reconnaissance en tant que paramètres d'entrée.

15. Serveur selon la revendication 14 comprenant en outre des moyens de détection d'activité pour produire le signal à reconnaître sous forme de segments de parole extraits d'un signal audio d'origine en-dehors de périodes d'inactivité vocale et dans lequel les moyens de contrôle sont adaptés pour commander les moyens de calcul de paramètres et les moyens de reconnaissance lorsque le signal reçu est de type audio de façon à :
• si le signal reçu de type audio est sous forme de segments de parole après détection d'activité vocale, activer les moyens de calcul de paramètres en leur adressant le signal reçu en tant que signal d'entrée, puis adresser les paramètres calculés par les moyens de calcul de paramètres aux moyens de reconnaissance en tant que paramètres d'entrée ;
• sinon activer les moyens de détection d'activité vocale du serveur en leur adressant le signal reçu en tant que signal d'entrée, puis adresser les segments extraits par les moyens de détection d'activité vocale aux moyens de calcul de paramètres en tant que paramètres d'entrée, puis adresser les paramètres calculés par les moyens de calcul de paramètres aux moyens de reconnaissance en tant que paramètres d'entrée ;

16. Serveur selon l'une des revendications 14 à 15, comprenant des moyens pour télécharger des ressources logicielles de reconnaissance vocale par l'intermédiaire du réseau de télécommunications à destination d'un terminal.

17. Serveur selon la revendication 16, dans lequel lesdites ressources comprennent au moins un module parmi : un module de VAD, un module de calcul de paramètres de modélisation d'un signal audio et un module de reconnaissance pour associer au moins une forme mémorisée à des paramètres de modélisation.

18. Serveur selon les revendications 14 à 17, comportant des moyens de détermination de la forme mémorisée à choisir entre les formes mémorisées déterminées respectivement au terminal et au serveur.

## Claims

1. Distributed speech recognition method, comprising at least one user terminal and at least one server, capable of communicating with one another via a telecommunications network, according to which, at the user terminal, at least the following steps are performed:
- obtain an audio signal to be recognized;
- calculate modeling parameters for the audio signal to be recognized; and
- attempt to associate a stored form with the modeling parameters;
and according to which, at the server, at least the following steps are performed:
- receive the signal transmitted by the user terminal;
- attempt to associate a stored form with the received signal;
**characterized by** the following steps, carried out at the level of the user terminal:
- independently of the step of attempting to associate a stored form:
- selecting a signal from among at least the audio signal to be recognized and a signal indicating the modeling parameters, as a function of criteria relating to the loading of the various processing means at the level of the terminal and of the server, and/or as a function of criteria relating to the availability of voice or data transmission channels; and
- sending the selected signal to the server.

2. Distributed speech recognition method according to Claim 1, according to which the signal transmitted by the user terminal to the server is selected from at least the audio signal to be recognized and a signal indicating the modeling parameters;
according to which, if the received signal is of the audio type, the server calculates modeling parameters for the received audio signal and attempts to associate a stored form with the modeling parameters of the received audio signal;
and according to which, if the received signal indicates modeling parameters, the server attempts to associate a stored form with said modeling parameters.

3. Method according to Claim 1 or Claim 2, according to which obtaining the signal to be recognized at the terminal comprises a voice activation detection in order to produce the audio signal to be recognized in the form of speech segments extracted from an original audio signal outside of periods without voice activity.

4. Method according to Claim 3, according to which the transmitted signal is a signal selected from amongst at least the original audio signal, the audio signal to be recognized in the form of segments extracted after voice detection and the signal indicating the modeling parameters.

5. Method according to Claims 2 to 4, according to which, when the received signal is of the audio type:
- if the received audio signal is in the form of speech segments extracted after voice detection, the server calculates modeling parameters for the received signal and attempts to associate a stored form with the modeling parameters of the received audio signal;
- otherwise, the server performs a voice activation detection applied to the received audio signal in order to produce an audio signal in the form of speech segments extracted from the received audio signal outside of periods without voice activity, then calculates modeling parameters for the audio signal and attempts to associate a stored form with the modeling parameters.

6. Method according to any one of the preceding claims, according to which the associated stored form determined at the terminal is chosen, when this associated form exists.

7. Method according to Claims 1 to 5 according to which the associated stored form determined the quickest is chosen.

8. Method according to Claims 1 to 5 according to which the associated stored form judged best according to a defined selection criterion is chosen.

9. User terminal for implementing a distributed speech recognition method according to one of Claims 1 to 8, comprising:
- means for obtaining an audio signal to be recognized;
- means for calculating modeling parameters for the audio signal; and
- recognition means for associating at least one stored form with modeling parameters calculated by the calculation means;
**characterized in that** it comprises:
- control means for selecting a signal to be sent to the server from among the audio signal to be recognized and a signal indicating the modeling parameters calculated as a function of criteria relating to the loading of the various processing means at the level of the terminal and of the server, and/or as a function of criteria relating to the availability of voice or data transmission channels.

10. User terminal according to Claim 9 in which the means for obtaining the audio signal to be recognized comprise means for detecting voice activity in order to produce the signal to be recognized in the form of speech segments extracted from an original audio signal, outside of periods without voice activity.

11. User terminal according to Claim 10 in which the control means are designed to select at least one signal to be transmitted to the server from amongst the original audio signal, the audio signal to be recognized in the form of the speech segments extracted by the voice activation detection means and the signal indicating the calculated modeling parameters.

12. User terminal according to Claims 9 to 11, in which at least one part of the parameter calculation means and of the recognition means is downloaded from the server.

13. User terminal according to Claims 9 to 12, comprising means for determining the stored form to be chosen between the stored forms determined at the terminal and at the server, respectively.

14. Server suitable for implementing a distributed speech recognition method according to one of Claims 1 to 8 comprising:
- means for receiving a signal coming from a user terminal and selected at said terminal; and
- recognition means for associating at least one stored form with modeling parameters at the input;
- means for calculating modeling parameters for an input signal;
**characterized in that** it comprises:
- control means for controlling the calculation means and the recognition means such that:
• when the signal received by the reception means is of the audio type, the parameter calculation means are activated by addressing the selected signal to them as input signal, and the parameters calculated by the calculation means are addressed to the recognition means as input parameters, and
• when the selected signal received by the reception means indicates modeling parameters, said indicated parameters are addressed to the recognition means as input parameters.

15. Server according to Claim 14 also comprising means for detecting activity in order to produce the signal to be recognized in the form of speech segments extracted from an original audio signal outside of periods without voice activity and in which the control means are designed to control the parameter calculation means and the recognition means when the received signal is of the audio type such that:
• if the received signal of the audio type is in the form of speech segments after voice activation detection, the parameter calculation means are activated by addressing the received signal to them as input signal, then the parameters calculated by the parameter calculation means are addressed to the recognition means as input parameters;
• otherwise, the server voice activation detection means are activated by addressing the received signal to them as input signal, then the segments extracted by the voice activation detection means are addressed to the parameter calculation means as input parameters, then the parameters calculated by the parameter calculation means are addressed to the recognition means as input parameters.

16. Server according to either of Claims 14 and 15, comprising means for downloading voice recognition software resources via the telecommunications network onto a terminal.

17. Server according to Claim 16, in which said resources comprise at least one module from amongst: a VAD module, a module for calculating modeling parameters for an audio signal and a recognition module for associating at least one stored form with modeling parameters.

18. Server according to Claims 14 to 17, comprising means for determining the stored form to be chosen between the stored forms determined at the terminal and at the server, respectively.

## Patentansprüche

1. Verfahren zur verteilten Spracherkennung, das mindestens ein Benutzerendgerät und mindestens einen Server aufweist, die fähig sind, über ein Fernmeldenetz miteinander zu kommunizieren, gemäß dem auf der Ebene des Benutzerendgeräts mindestens die folgenden Schritte durchgeführt werden:
- Erhalt eines zu erkennenden Audiosignals;
- Berechnung der Modellisierungsparameter des zu erkennenden Audiosignals; und
- Versuch, den Modellisierungsparametern eine gespeicherte Form zuzuordnen;
und gemäß dem auf der Ebene des Servers mindestens die folgenden Schritte durchgeführt werden:
- Empfang eines vom Benutzerendgerät gesendeten Signals;
- Versuch, dem empfangenen Signal eine gespeicherte Form zuzuordnen;
**gekennzeichnet durch** die folgenden Schritte, die auf der Ebene des Benutzerendgeräts durchgeführt werden:
- unabhängig vom Schritt des Versuchs der Zuordnung einer gespeicherten Form:
- Auswahl eines Signals aus mindestens dem zu erkennenden Audiosignal und einem die Modellisierungsparameter anzeigenden Signal in Abhängigkeit von Kriterien bezüglich des Ladungszustands der verschiedenen Verarbeitungseinrichtungen auf der Ebene des Endgeräts und des Servers, und/oder in Abhängigkeit von Kriterien bezüglich der Verfügbarkeit von Stimm- oder Datenübertragungskanälen; und
- Senden des ausgewählten Signals an den Server.

2. Verfahren zur verteilten Spracherkennung nach Anspruch 1, gemäß dem das vom Benutzerendgerät an den Server gesendete Signal aus mindestens dem zu erkennenden Audiosignal und einem die Modellisierungsparameter anzeigenden Signal ausgewählt wird;
gemäß dem, wenn das empfangene Signal vom Audio-Typ ist, der Server Modellisierungsparameter des empfangenen Audiosignals berechnet und versucht, den Modellisierungsparametern des empfangenen Audiosignals eine gespeicherte Form zuzuordnen;
und gemäß dem, wenn das empfangene Signal Modellisierungsparameter anzeigt, der Server versucht, den Modellisierungsparametern eine gespeicherte Form zuzuordnen.

3. Verfahren nach Anspruch 1 oder 2, gemäß dem der Erhalt des zu erkennenden Signals im Endgerät eine Sprachaktivitätserfassung enthält, um das zu erkennende Audiosignal in Form von Sprachsegmenten zu erzeugen, die aus einem Ursprungsaudiosignal außerhalb von Perioden sprachlicher Inaktivität extrahiert werden.

4. Verfahren nach Anspruch 3, gemäß dem das gesendete Signal ein Signal ist, das aus mindestens dem Ursprungsaudiosignal, dem zu erkennenden Audiosignal in Form von nach Spracherfassung extrahierten Segmenten und dem Signal ausgewählt wird, das die Modellisierungsparameter anzeigt.

5. Verfahren nach Anspruch 2 bis 4, gemäß dem, wenn das empfangene Signal vom Audio-Typ ist:
- wenn das empfangene Signal in Form von Sprachsegmenten vorliegt, die nach Spracherkennung extrahiert werden, der Server Modellisierungsparameter des empfangenen Signals berechnet und versucht, den Modellisierungsparametern des empfangenen Audiosignals eine gespeicherte Form zuzuordnen;
- der Server sonst eine Erfassung sprachlicher Aktivität durchführt, die an das empfangene Audiosignal angewendet wird, um ein Audiosignal in Form von Sprachsegmenten zu erzeugen, die aus dem außerhalb von Perioden der sprachlichen Inaktivität empfangenen Audiosignal extrahiert werden, dann Modellisierungsparameter des Audiosignals berechnet und versucht, den Modellisierungsparametern eine gespeicherte Form zuzuordnen.

6. Verfahren nach einem der vorhergehenden Ansprüche, gemäß dem die auf der Ebene des Endgeräts bestimmte zugeordnete gespeicherte Form gewählt wird, wenn sie existiert.

7. Verfahren nach den Ansprüchen 1 bis 5, gemäß dem die zugeordnete gespeicherte Form gewählt wird, die am schnellsten bestimmt wird.

8. Verfahren nach den Ansprüchen 1 bis 5, gemäß dem die zugeordnete gespeicherte Form gewählt wird, die gemäß einem definierten Wahlkriterium die beste ist.

9. Benutzerendgerät, um ein Verfahren zur verteilten Spracherkennung nach einem der Ansprüche 1 bis 8 anzuwenden, das aufweist:
- Einrichtungen zum Erhalt eines zu erkennenden Audiosignals;
- Einrichtungen zur Berechnung von Modellisierungsparametern des Audiosignals; und
- Erkennungseinrichtungen, um mindestens eine gespeicherte Form Modellisierungsparametern zuzuordnen, die von den Recheneinrichtungen berechnet werden;
**dadurch gekennzeichnet, dass** es aufweist:
- Steuereinrichtungen, um ein an den Server zu sendendes Signal aus dem zu erkennenden Audiosignal und einem Signal auszuwählen, das die Modellisierungsparameter anzeigt, die in Abhängigkeit von Kriterien bezüglich des Ladungszustands der verschiedenen Verarbeitungseinrichtungen auf der Ebene des Endgeräts und des Servers und/oder in Abhängigkeit von Kriterien bezüglich der Verfügbarkeit von Sprach- oder Datenübertragungskanälen berechnet werden.

10. Benutzerendgerät nach Anspruch 9, bei dem die Einrichtungen zum Erhalt des zu erkennenden Audiosignals Einrichtungen zur Erfassung von Sprachaktivität enthalten, um das zu erkennende Signal in Form von Sprachsegmenten zu erzeugen, die aus einem Ursprungsaudiosignal außerhalb von Perioden sprachlicher Inaktivität extrahiert werden.

11. Benutzerendgerät nach Anspruch 10, bei dem die Steuereinrichtungen geeignet sind, um mindestens ein an den Server zu sendendes Signal aus dem Ursprungsaudiosignal, dem zu erkennenden Audiosignal in Form von Sprachsegmenten, die von den Einrichtungen zur Erfassung von Sprachaktivität extrahiert werden, und dem Signal auszuwählen, das die berechneten Modellisierungsparameter anzeigt.

12. Benutzerendgerät nach den Ansprüchen 9 bis 11, bei dem mindestens ein Teil der Einrichtungen zur Berechnung von Parametern und der Erkennungseinrichtungen vom Server aus heruntergeladen wird.

13. Benutzerendgerät nach den Ansprüchen 9 bis 12, das Einrichtungen zur Bestimmung der gespeicherten Form aufweist, die aus den gespeicherten Formen auszuwählen ist, die im Endgerät bzw. im Server bestimmt werden.

14. Server, der geeignet ist, um ein Verfahren zur verteilten Spracherkennung nach einem der Ansprüche 1 bis 8 anzuwenden, der aufweist:
- Einrichtungen zum Empfang von einem Benutzerendgerät eines im Endgerät ausgewählten Signals; und
- Erkennungseinrichtungen, um mindestens eine gespeicherte Form Modellisierungsparametern am Eingang zuzuordnen;
- Einrichtungen zum Berechnen von Modellisierungsparametern eines Eingangssignals;
**dadurch gekennzeichnet, dass** er aufweist:
- Steuereinrichtungen, um die Recheneinrichtungen und die Erkennungseinrichtungen zu steuern, um:
• wenn das von den Empfangseinrichtungen empfangene Signal vom Audio-Typ ist, die Parameter-Berechnungseinrichtungen zu aktivieren, indem das ausgewählte Signal als Eingangssignal an sie übermittelt wird, und die von den Recheneinrichtungen berechneten Parameter an die Erkennungseinrichtungen als Eingangsparameter zu übermitteln, und
• wenn das von den Empfangseinrichtungen empfangene ausgewählte Signal Modellisierungsparameter anzeigt, die angezeigten Parameter an die Erkennungseinrichtungen als Eingangsparameter zu übermitteln.

15. Server nach Anspruch 14, der außerdem Einrichtungen zur Aktivitätserfassung aufweist, um das zu erkennende Signal in Form von Sprachsegmenten zu erzeugen, die aus einem Ursprungsaudiosignal außerhalb von sprachlichen Inaktivitätsperioden extrahiert werden, und bei dem die Steuereinrichtungen geeignet sind, um die Parameter-Berechungseinrichtungen und die Erkennungseinrichtungen zu steuern, wenn das empfangene Signal vom Audio-Typ ist, um:
• wenn das empfangene Signal vom Audio-Typ in Form von Sprachsegmenten nach Erfassung einer Sprachaktivität ist, die Parameter-Berechnungseinrichtungen zu aktivieren, indem ihnen das empfangene Signals als Eingangssignal übermittelt wird, dann die von den Parameter-Berechnungseinrichtungen berechneten Parameter an die Erkennungseinrichtungen als Eingangsparameter zu übermitteln;
• sonst die Sprachaktivität-Erfassungseinrichtungen des Servers zu aktivieren, indem ihnen das empfangene Signal als Eingangssignal übermittelt wird, dann die von den Sprachaktivität-Erfassungseinrichtungen extrahierten Segmente an die Parameter-Berechnungseinrichtungen als Eingangsparameter zu übermitteln, dann die von den Parameter-Berechnungseinrichtungen berechneten Parameter an die Erkennungseinrichtungen als Eingangsparameter zu übermitteln.

16. Server nach einem der Ansprüche 14 bis 15, der Einrichtungen aufweist, um Spracherkennungs-Softwareressourcen über das Fernmeldenetz an ein Endgerät herunterzuladen.

17. Server nach Anspruch 16, bei dem die Ressourcen mindestens eines der folgenden Module aufweisen: ein VAD-Modul, ein Modul zur Berechnung von Modellisierungsparametern eines Audiosignals und ein Erkennungsmodul, um Modellisierungsparametern mindestens eine gespeicherte Form zuzuordnen.

18. Server nach den Ansprüchen 14 bis 17, der Einrichtungen zur Bestimmung der gespeicherten Form aufweist, die aus den gespeicherten Formen auszuwählen ist, die im Endgerät bzw. im Server bestimmt werden.
